# EUROPÄISCHE PATENTSCHRIFT

(11) **EP 2 876 816 B1**
(45) Veröffentlichungstag und Bekanntmachung des Hinweises auf die Patenterteilung: **22.03.2017**
(21) Anmeldenummer: 14003712.8
(22) Anmeldetag: 04.11.2014
(51) Int. Cl.: H04B 1/40

(54) **Funkdatentransceiver mit HF-Isolation der Außenbeschaltung**
Wireless data transceiver with RF isolation of external circuitry
Émetteur-récepteur de données radio avec isolation RF du câblage extérieur

(30) Priorität: 26.11.2013 DE 102013019799
(43) Veröffentlichungstag der Anmeldung: 27.05.2015
(73) Patentinhaber: Diehl Metering Systems GmbH, 90451 Nürnberg (DE)
(72) Erfinder: Becke, Gerhard, 91301 Forchheim (DE)
(74) Vertreter: Diehl Patentabteilung

(56) Entgegenhaltungen:
- US-A1- 2009 252 348
- US-A1- 2011 098 008

## Beschreibung

Die Erfindung betrifft einen hier so genannten Funkdatentransceiver im Sinne eines Sende- und / oder Empfangs-Funkgerätes, insbesondere für Sensor- oder Verbrauchsdaten von Strom, Gas, Wasser Wärme oder dergleichen. Die Daten werden z.B. an einer Verbrauchsstelle periodisch erfasst und in digitale Daten-Telegramme umgesetzt. Damit wird in einer Hochfrequenzschaltung ein Träger im UHF-Spektrum moduliert, um die Daten im Rahmen eines Zeitschlitz-Rasters unsynchronisiert über eine Sende-Antenne an einen Sammelspeicher auszusenden. Dessen Empfangs-Antenne speist eine Hochfrequenzschaltung mit Demodulator, zum Abspeichern der empfangenen Daten.

Von derartigen batteriegespeisten Funkgeräten wird eine Betriebsdauer in der Größenordnung von typisch 10 Jahren erwartet. Darauf sind insbesondere deren Hochfrequenzschaltungen optimiert. Deren niedrigen Signalpegel erfordern eine sorgfältige Resonanzabstimmung der Hochfrequenzschaltung auf die gegebene Antennencharakteristik. Solche Resonanzabstimmung wird aber abträglich beeinflusst, sobald eine Änderung in der Außenbeschaltung des Funkgerätes auftritt, etwa infolge des externen Anschlusses eines diskreten Bauteiles oder eines Kabels an seine Hochfrequenzschaltung. Denn die abgestrahlte beziehungsweise empfangene Antennenenergie wird infolge teilweisen Ausbreitens der Felder über solche Außenbeschaltung gewissermaßen teilweise kurzgeschlossen. Ein solcher Einfluss geht insbesondere aus von dem Anschluss einer Leitung oder von deren Längenveränderung wie einer Daten- oder Sensorleitung zum Einspeisen beziehungsweise Ausgeben der Datentelegramme oder Sensordaten an die sendende beziehungsweise aus der empfangenden Hochfrequenzschaltung. Aber auch der Anschluss einer Stromversorgungs-Leitung zu einer etwa abgelegen zugänglichen Batterie, oder der Anschluss einer Erdungsleitung an die Schaltungsmasse der Schaltungsplatine beeinträchtigen die störungsfrei überbrückbare Reichweite zwischen Sender- und Empfänger-Hochfrequenzschaltung. Der Effekt wäre zwar weniger ausgeprägt, wenn das Funkgerät in ein Metallgehäuse oder in ein metallisiertes Kunststoffgehäuse eingebaut wäre - was aber angesichts preiswert verfügbarer und standardisierter Kunststoffgehäuse in der Praxis gewöhnlich nicht der Fall ist.

Aus der US 2009/0252348 A1 ist eine Funkantenne bekannt, welche in ein über Hochfrequenzsperren mit Audio-Baugruppen verbundenes Audiokabel implementiert ist.

In der US 2011/0098008 A1 ist ein Funkempfänger beschrieben, bei welchem die Masseleitung des Stromversorgungskabels als Antenne verwendet wird, die über eine Hochfrequenzsperre an die Masse des Funkempfängers angeschlossen ist.

Gemäß internem Stand der Technik werden aus Resonanzverstimmung resultierenden Leistungsverluste weitgehend vermieden durch eine symmetrische Kopplung der Antenne samt ihrer Gegenmasse an die Hochfrequenzschaltung mit ihrer Schaltungsmasse; wofür die Hochfrequenzschaltung über einen so genannten Balun-Transformator in den beiden Koppelleitungen an die sendende beziehungsweise an die empfangende Antenne angeschlossen ist. Der Trafo würde den Antennenanschluss an die Hochfrequenzschaltung blockieren, wenn in den Antennen-Hin- und Rückleitungen unterschiedliche Ströme aufträten.

Ein anderes Beispiel für den Einsatz eines solchen Balun-Transformators in der Antennenleitung ist der DE 10 2011 086 641 A1 zu entnehmen.

Ein derartiges transformatorisches Symmetrierbauteil ist, wegen dessen Spulen, im Vergleich zu gängigen SMD-Schaltungskomponenten aber sehr voluminös und kostspielig. Vorliegender Erfindung liegt deshalb die technische Problemstellung zugrunde, mit kleineren und möglichst auch preisgünstigeren Bauelementen die Empfindlichkeit der Abstimmung der Hochfrequenzschaltung auf die Antenne in Abhängigkeit von einer Außenbeschaltung der Hochfrequenzschaltung wenigstens merklich zu reduzieren.

Diese Aufgabe ist gemäß den im Hauptanspruch angegebenen wesentlichen Merkmalen gelöst. Danach bewirkt je eine Hochfrequenzsperre in den ein- oder mehrpoligen Zuführungen aller Außenbeschaltungen in Form von Bauteilanschlüssen und / oder Leitungen, dass diese für die Antennenfrequenzen gar nicht in Erscheinung treten - so, als wäre deren Außenbeschaltung gar nicht hinzugekommen. Aber auf die Gleichstromspeisung der Hochfrequenzschaltung und auf die niedrigen Frequenzen in den über Datenleitungen eingehenden beziehungsweise ausgehenden Datentelegrammen und sonstigen Sensordaten ist die Hochfrequenzsperre praktisch ohne Einfluss.

Grundsätzlich könnte die erfindungsgemäß eingesetzte Hochfrequenzsperre als passives Filter (L,R,C) realisiert sein. Aber aus Platz- und Kostengründen insbesondere in Hinblick auf dessen Spule wäre das gewöhnlich unwirtschaftlich. Vorzugsweise wird im Rahmen vorliegender Erfindung jedoch das hochfrequenzmäßige Abkoppeln der Außenbeschaltungen von der Hochfrequenzschaltung dadurch realisiert, dass die Hochfrequenzschaltung, in Serie zu jedem Zugang für Außenbeschaltungen, mit einer so
genannten Ferritperle, oder einer Serienschaltung von solchen Ferritperlen, beschaltet ist. Solche Ferritperlelen, wie sie zu Störfrequenzfilterung handelsüblich sind, weisen Abmessungen auf, die an sich schon extrem niedrig sind; und sie sind außer mit Bedrahtung auch mit SMD-Stirnkappen verfügbar. Sie bestehen im Wesentlichen aus Stapeln sehr dünner Ferritkeramik-Scheiben, die jeweils einseitig zwischen ihren einander stirnseitig gegenüberliegenden Anschlussklemmen mit Leitungszügen beschichtet sind, welche gemäß Material und resultierendem Querschnitt bei Stromfluss mit niedrigen Frequenzen den wirksamen, dann im wesentlichen ohmschen Durchgangswiderstand bestimmen. Stromfluss hoher Frequenzen dagegen wird im Wesentlichen in Wärme umgesetzt und dadurch blockiert. Insbesondere ist für relativ niedrige Frequenzen in der Größenordnung unter 1 MHz schon keine Impedanz mehr wirksam, und der Gleichstromwiderstand liegt bei sehr kleinen Werten (typisch um 1 bis 2 Ohm). In Frequenzbereichen, die für den Datenfunk verfügbar sind (insbesondere 169, 434 und 868 MHz) wird diese Hochfrequenzsperre mit 2 bis 3,5 kOhm wünschenswert hochohmig; denn in der Praxis setzt eine wirksame Abkopplung von Außenbeschaltungen bereits oberhalb eines Übergangswiderstandes von etwa 1,5 kOhm ein. So kann schon mit dieser einzigen kleinbauenden, preiswert verfügbaren Hochfrequenzsperre hinter jedem Zugang für eine Außenbeschaltung deren Hochfrequenzabkopplung über das gesamte interessierende Frequenzspektrum realisiert werden.

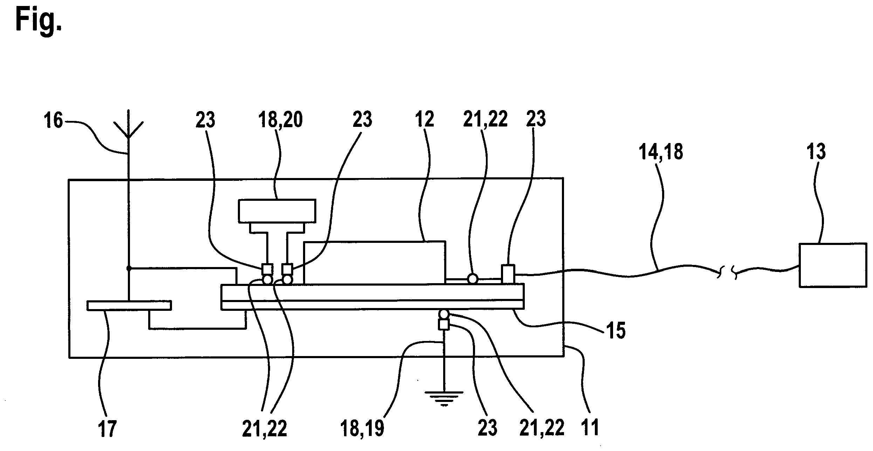

Weitere Abwandlungen und zusätzliche Weiterbildungen zur erfindungsgemäßen Lösung ergeben sich aus den weiteren Ansprüchen und, auch unter Berücksichtigung deren Vorteilen, aus nachstehender Beschreibung eines in der Zeichnung auf das Funktionswesentliche reduziert skizzierten Realisierungsbeispieles zur Erfindung. Die einzige Figur der Zeichnung veranschaulicht die bevorzugte Maßnahme zur erfindungsgemäßen Hochfrequenzsperre an Zugängen für Außenbeschaltungen zur Hochfrequenzschaltung eines Funk-Senders oder -Empfängers.

Ein als Transmitter (Sender) und / oder Receiver (Empfänger) auslegbares Funkgerät 11 weist eine Hochfrequenzschaltung 12 auf ihrer mit einer Schaltungsmasse 15 ausgestatteten Schaltungsplatine auf. In der Hochfrequenzschaltung 12 wird im Sendefalle eine hierin im UHF-Spektrum generierte Trägerfrequenz mit, insbesondere zeitgestempelte Verbrauchswerte und -orte oder andere Sensordaten repräsentierenden, Datentelegrammen moduliert, die von einem in diesem Beispiel externen Messgerät 13 über eine Datenleitung 14 angeliefert werden; im Empfangsfalle werden die Datentelegramme in der Hochfrequenzschaltung 12 demoduliert und deren Informationen über die Datenleitung 14 an einen in diesem Beispiel externen Sammelspeicher (nicht skizziert) übermittelt.

An die Hochfrequenzschaltung 12 mit seiner Schaltungsmasse 15 ist wenigstens eine Antenne 16 mit ihrer Gegenmasse 17 angeschlossen. Im Interesse hohen Wirkungsgrades, also großer überbrückbarer Funkstrecken, sind beide zueinander auf Resonanz abgestimmt. Diese Abstimmung soll nicht dadurch beeinträchtigt werden, dass die Hochfrequenzschaltung12 später, insbesondere zu ihrem Betrieb, noch eine Außenbeschaltung 18 erfährt, etwa durch Anschluss oder Längenänderung der Datenleitung 14, der Erdungsleitung 19 oder durch Anschluss eines Bauelementes 20 wie eines Schwingquarzes.

Erfindungsgemäß wird eine Beeinträchtigung der schon erfolgten Resonanzabstimmung zwischen Hochfrequenzschaltung 12 und Antenne 16 durch ein späteres Hinzufügen oder Ändern einer Außenbeschaltung 18 durch deren hochfrequenzmäßiges Abkoppeln von der Hochfrequenzschaltung 12 mittels einer auf ihr realisierten Hochfrequenzsperre 21 vermieden. Hochfrequenzmäßig "spürt" die Hochfrequenzschaltung 12 dann gar nicht, ob eine Außenbeschaltung 18 angelegt oder verändert wurde, oder ob nicht.

Eine solche Hochfrequenzsperre 21 wird bevorzugt in der Bauform einer Ferritperle 22 mit SMD-Anschlusskappen (auch sogenanntes "Chip Ferrite Bead") realisiert. Zwischen jedem in der Zeichnung durch eine Anschlussklemme symbolisierten Zugang 23 für die Pole einer Außenbeschaltung 18 und der Hochfrequenzschaltung 12 ist wenigstens eine derartige Ferritperle 22 in Serie geschaltet. Außenbeschaltungen 18 können also nur über diese Hochfrequenzsperren 21 erfolgen und dadurch die schon erfolgte Antennenresonanzabstimmung nicht mehr beeinträchtigen.

Um bei einem sendenden oder empfangenden Funkgerät 11 die Resonanzabstimmung seiner Hochfrequenzschaltung 12 auf seiner Antenne 16 nicht durch eine nachträglich angebrachte oder veränderte Außenbeschaltung 18 etwa in Form eines Bauelementes 20, einer Erdungsleitung 19 oder einer Datenleitung 14 zu beeinträchtigen, wird also erfindungsgemäß die Außenbeschaltung 18 über eine Hochfrequenzsperre 21 an die Hochfrequenzschaltung 12 geführt und dadurch hochfrequenzmäßig von der Hochfrequenzschaltung 12 isoliert. Die Hochfrequenzsperre 21 wird bevorzugt in Form von SMD-Ferritperlen 22 realisiert, die auf der Platine der Hochfrequenzschaltung 12 jeweils zwischen dieser und den allpoligen Anschlussklemmen oder dergleichen Zugängen 23 für die Außenbeschaltung 18 in Serie geschaltet sind.

### Bezugszeichenliste

- 11: Funkgerät (mit 12 und 16)
- 12: Hochfrequenzschaltung (an 16)
- 13: Messgerät (über 14 an 11/12)
- 14: Datenleitung (als 18)
- 15: Schaltungsmasse (zu 12)
- 16: Antenne (an 12)
- 17: Gegenmasse (zu 16)
- 18: Außenbeschaltung (an 12)
- 19: Erdungsleitung (an 15/12; als 18)
- 20: Bauelement (an 12; als 18)
- 21: Hochfrequenzsperre (zwischen 23/18 und 12)
- 22: Ferritperle (als 21 hinter 23)
- 23: Zugang (vor 21/22 für 18)

## Patentansprüche

1. Funkdatentransceiver mit einer Hochfrequenzschaltung (12) und wenigstens einer Antenne (16), wobei die Antenne (16) an die Hochfrequenzschaltung (12) angeschlossen ist und beide zueinander auf Resonanz abgestimmt sind, wobei die Hochfrequenzschaltung (12) mit einer oder mehreren Außenbeschaltungen (18) verbindbar ist und eine Verbindung mit der oder jeder Außenbeschaltung (18) über Hochfrequenzsperren (21), die zwischen der Hochfrequenzschaltung (12) und allen Zugängen (23) für Außenbeschaltungen (18) in Serie geschaltet sind, führt, derart, dass eine nachträglich angebrachte oder veränderte Außenbeschaltung (18) die Resonanzabstimmung nicht beeinträchtigt.

2. Funkdatentransceiver nach dem vorangehenden Anspruch, **dadurch gekennzeichnet, dass** eine mehrpolige Außenbeschaltung (18) eine allpolige Hochfrequenzsperre (21) erfährt.

3. Funkdatentransceiver nach einem der vorangehenden Ansprüche, **dadurch gekennzeichnet, dass** die Hochfrequenzsperren (21) auf einer Schaltungsplatine der Hochfrequenzschaltung (12) realisiert sind.

4. Funkdatentransceiver nach einem der vorangehenden Ansprüche, **dadurch gekennzeichnet, dass** mehrere Hochfrequenzsperren (21) in Serie geschaltet sind.

5. Funkdatentransceiver nach einem der vorangehenden Ansprüche, **dadurch gekennzeichnet, dass** die Hochfrequenzsperren (21) als Ferritperle (22) realisiert sind.

6. Funkdatentransceiver nach dem vorangehenden Anspruch, **dadurch gekennzeichnet, dass** die Ferritperlen (22) als SMD-Bauelement konfiguriert sind.

7. Funkdatentransceiver nach einem der vorangehenden Ansprüche, **dadurch gekennzeichnet, dass** eine Außenbeschaltung (18) in Form einer Datenleitung (14) vorgesehen ist.

8. Funkdatentransceiver nach einem der vorangehenden Ansprüche, **dadurch gekennzeichnet, dass** eine Außenbeschaltung (18) in Form einer Erdungsleitung (19) und / oder eines Bauelementes (20) vorgesehen ist.

## Claims

1. Radio data transceiver having a radio-frequency circuit (12) and at least one antenna (16), wherein the antenna (16) is connected to the radio-frequency circuit (12) and the two are tuned to resonance with one another, wherein the radio frequency circuit (12) is connectable to one or more external circuit elements (18) and a connection to the or each external circuit element (18) is routed via radio-frequency low-pass filters (21), which are connected in series between the radio-frequency circuit (12) and all accesses (23) for external circuit elements (18), such that a subsequently fitted or altered external circuit element (18) does not adversely affect the resonance tuning.

2. Radio data transceiver according to the preceding claim, **characterized in that** a multipole external circuit element (18) encounters an all-pole radio-frequency low-pass filter (21).

3. Radio data transceiver according to either of the preceding claims, **characterized in that** the radio-frequency low-pass filters (21) are realized on a circuit board of the radio-frequency circuit (12).

4. Radio data transceiver according to one the preceding claims, **characterized in that** multiple radio-frequency low-pass filters (21) are connected in series.

5. Radio data transceiver according to one of the preceding claims, **characterized in that** the radio-frequency low-pass filters (21) are realized as ferrite beads (22).

6. Radio data transceiver according to the preceding claim, **characterized in that** the ferrite beads (22) are configured as an SMD component.

7. Radio data transceiver according to one of the preceding claims, **characterized in that** an external circuit element (18) is provided in the form of a data line (14).

8. Radio data transceiver according to one of the preceding claims, **characterized in that** an external circuit element (18) is provided in the form of an earthing line (19) and/or a component (20).

## Revendications

1. Émetteur-récepteur de données radioélectrique comprenant un circuit à haute fréquence (12) et au moins une antenne (16), l'antenne (16) étant raccordée au circuit à haute fréquence (12) et les deux étant mutuellement accordés en résonance, le circuit à haute fréquence (12) pouvant être relié à une ou plusieurs connexions externes (18) et réalisant une liaison avec la ou les connexions externes (18) par le biais de dispositifs de blocage des hautes fréquences (21) qui sont branchés en série entre le circuit à haute fréquence (12) et tous les accès (23) aux connexions externes (18), de telle sorte qu'une connexion externe (18) montée ou modifiée à postériori n'affecte pas l'accord en résonance.

2. Émetteur-récepteur de données radioélectrique selon la revendication précédente, **caractérisé en ce qu'**une connexion externe (18) à plusieurs bornes subit un blocage des hautes fréquences (21) sur toutes les bornes.

3. Émetteur-récepteur de données radioélectrique selon l'une des revendications précédentes, **caractérisé en ce que** les dispositifs de blocage des hautes fréquences (21) sont réalisés sur une platine de circuit du circuit à haute fréquence (12).

4. Émetteur-récepteur de données radioélectrique selon l'une des revendications précédentes, **caractérisé en ce que** plusieurs dispositifs de blocage des hautes fréquences (21) sont branchés en série.

5. Émetteur-récepteur de données radioélectrique selon l'une des revendications précédentes, **caractérisé en ce que** les dispositifs de blocage des hautes fréquences (21) sont réalisés sous la forme de perles en ferrite (22).

6. Émetteur-récepteur de données radioélectrique selon la revendication précédente, **caractérisé en ce que** les perles en ferrite (22) sont configurées sous la forme d'un composant CMS.

7. Émetteur-récepteur de données radioélectrique selon l'une des revendications précédentes, **caractérisé en ce qu'**une connexion externe (18) se présente sous la forme d'une ligne de données (14).

8. Émetteur-récepteur de données radioélectrique selon l'une des revendications précédentes, **caractérisé en ce qu'**une connexion externe (18) se présente sous la forme d'une ligne de mise à la terre (19) et/ou d'un composant (20).
